# EUROPÄISCHE PATENTSCHRIFT

(11) **EP 0 883 881 B1**
(45) Veröffentlichungstag und Bekanntmachung des Hinweises auf die Patenterteilung: **24.04.2002**
(21) Anmeldenummer: 97949970.4
(22) Anmeldetag: 28.11.1997
(51) Int. Cl.: H01B 3/46, C08G 77/22

(54) **METALLACKDRÄHTE**
ENAMELLED METALLIC WIRES
FILS METALLIQUES LAQUES

(30) Priorität: 04.12.1996 DE 19650288
(43) Veröffentlichungstag der Anmeldung: 16.12.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: WOLTER, Herbert, D-97950 Grossrinderfeld (DE); STORCH, Werner, D-97204 Höchberg (DE); DEICHMANN, Karl, D-97084 Würzburg (DE)
(86) Internationale Anmeldenummer: DE9702781
(87) Internationale Veröffentlichungsnummer: WO9825277

(56) Entgegenhaltungen:
- EP-A- 0 451 709
- DE-A- 19 515 756
- DE-C- 4 416 857
- DE-C- 4 423 811

## Beschreibung

Die Erfindung betrifft die Verwendung eines organisch modifizierten Kieselsäure (hetero) polykondensats zur Herstellung von Metallackdrähten, wobei mindestens eine elektrisch isolierende Lackschicht aus den organisch modifizierten Kieselsäure-(hetero)polykondensaten besteht. Solche lackisolierten Drähte, die insbesondere aus Kupfer bestehen, werden seit langem für die Herstellung von Wicklungen von Elektromotoren und anderen Spulen verwendet. Die aufgetragene Lackschicht soll dabei neben dem Schutz von mechanischen Einflüssen auch isolierend wirken. Die aufzutragende Lackschicht bzw. mehrere übereinander aufzutragende Lackschichten werden mit speziell hierfür entwickelten Auftragssystemen aufgebracht, wobei die im Lack enthaltenen Lösungsmittel durch eine thermische Behandlung entfernt werden. Bei dieser thermischen Behandlung werden gleichzeitig die organischen Harze durch Polykondensation ausgehärtet. Die bisher verwendeten Polymersysteme auf Polyimid- bzw. Polyamidbasis sind jedoch nicht immer geeignet, auftretenden mechanischen Beanspruchungen standzuhalten, wie sie insbesondere beim Wickeln von Spulen oder anderen Elementen auftreten.

Es wird eine verbesserte Kratz- und Haftfestigkeit und ein größerer Widerstand bei schabender Beanspruchung und somit höhere Abriebfestigkeit gefordert.

Die beschichteten Metalldrähte müssen aber auch mit aufgetragener Beschichtung ausreichend flexibel sein und die Beschichtung darf beim Biegen und entsprechender teilweiser Dehnung entlang des Biegeradius nicht reißen. Auch eine hohe Teilentladungsstabilität ist ein wichtiges Kriterium.

Außerdem muß bzw. müssen die aufgetragene Lackschicht bzw. mehrere übereinander aufgebrachte Lackschichten auch bei relativ hohen Temperaturen die gewünschten Eigenschaften aufweisen und es dürfen keine schädlichen Stoffe bei einer Erwärmung austreten.

Zur Senkung der Kosten bei der Herstellung solcher Metallackdrähte müssen hohe Aushärtungsgeschwindigkeiten erreicht werden, um die erforderliche Beschichtungszeit zu verkürzen und den erforderlichen räumlichen Aufwand für die Beschichtungsanlagen klein halten zu können. Unter dem Umweltaspekt ist es außerdem erforderlich, Beschichtungsmaterialien zu verwenden, die keine bzw. nicht toxische und nicht aggressive Lösungsmittel enthalten.

Es ist daher Aufgabe der Erfindung, Metallackdrähte mit einer oder mehreren elektrisch isolierenden Lackschichten zu versehen, wobei eine hohe Härtungsgeschwindigkeit bei gleichzeitiger Verbesserung der mechanischen, thermischen und elektrischen Eigenschaften der aufgebrachten Lackschichten gesichert ist.

Erfindungsgemäß wird diese Aufgabe durch die Merkmale des Anspruchs 1 für die Verwendung eines organisch modifizierten Kieselsäure(hetero)polykondensats zur Herstellung von Metallackdrähten gelöst. Vorteilhafte Ausgestaltungsformen und Weiterbildungen der Erfindung ergeben sich bei der Verwendung der in den untergeordneten Ansprüchen enthaltenen Merkmale.

Die erfindungsgemäß aufgetragenen elektrisch isolierenden Lackschichten enthalten im Gegensatz zu den bisher verwendeten keine kritischen Lösungsmittel, wie Xylole, Kresole, NMP oder andere, so daß bei der Beschichtung und während der Aushärtung keine zusätzlichen Anforderungen bezüglich einer aufwendigen Absauganlage und Filterung der abgesaugten Gase mehr erforderlich sind. Da bei den aufgetragenen Lackschichten in der Regel die organisch polymerisierbaren Gruppen mit den anorganischen Polymerstrukturen verbunden sind, treten keine toxikologisch problematische Monomere wie z.B. Acrylat-Monomere auf.

Die Beschichtung kann sehr flexibel mit verschiedenen Verfahren durchgeführt werden, sie können beispielsweise durch Extrusion mit hoher Produktivität und geringsten Verlusten aufgebracht werden. Bei einem Beschichtungsgang können wesentlich größere Schichtdicken aufgebracht werden, als dies bei den herkömmlichen Verfahren und den herkömmlich verwendeten Drahtlacken möglich ist. So können bei einem Beschichtungsgang eine Schichtdicke aufgebracht werden, die bisher nur mit zehn nacheinander aufgebrachten Schichten erreicht worden ist. Die Schichtdicke sollte im Bereich zwischen 2 und 100 µm und bevorzugt zwischen 5 und 30 µm sein.

Für die Härtung können die verschiedensten Verfahren und Energien eingesetzt werden, so kann die Aushärtung z.B. mit UV- IR- normalem Licht- oder thermisch bzw. mit der Kombination mehrerer Energieformen durchgeführt werden. Da die Härtungsgeschwindigkeiten der IR- bzw. photoinduzierte Härtung deutlich über der thermischen liegt, sind die entsprechenden Lacksysteme bevorzugt. Dadurch ergibt sich auch insgesamt eine höhere Applikationsgeschwindigkeit.

Ein weiterer Vorteil ist die große Variabilität bei der Zusammensetzung der Lackschicht, die auf die verschiedensten mechanischen Anforderungen abgestimmt und entsprechend optimiert werden kann. So kann für die verschiedensten Anwendungsfälle die Abriebfestigkeit, die Kratzfestigkeit, die Härte, die Flexibilität, die Zugefestigkeit, die Haftung und die Dehnbarkeit entsprechend für alle oder spezielle Eigenschaften optimiert werden.

Noch ein Vorteil ergibt sich durch die Erreichung einer relativ hohen Gesamtvernetzungsdichte, die auch hohe tan δ-Sprungtemperaturen sichert und der anorganische Molekülteil eine hohe Teilentladungsstabilität sichert, wie sie z.B. in Elektromotoren nötig sind.

Auch die elektrischen Eigenschaften sind günstig, da mit den aufgebrachten Lackschichten hohe Durchschlagfestigkeiten und hohe Durchgangswiderstände erreichbar sind.

Die erfindungsgemäßen Metallackdrähte sind in ihren Eigenschaften gegenüber den bisher verwendeten Lackschichten stark verbessert, da insbesondere sich normalerweise gegeneinander ausschließende Anforderungen, wie z.B. eine hohe Kratzfestigkeit (Schabefestigkeit) und eine hohe Zugfestigkeit bzw. Dehnbarkeit in weiten Temperaturbereichen normalerweise nicht optimal berücksichtigt werden konnten.

Zusätzlich können eine oder mehrere Schichten aus anderen Stoffe oder Stoffgemischen aufgebracht werden.

Die Beschichtung kann auf verschiedensten Metallen, wie Kupfer, Gold, Silber, Aluminium, Zinn, Zink oder Eisen oder Legierungen aufgebracht werden.

Bei der erfindungsgemäßen Verwendung eines organisch modifizierten Kieselsäure(hetero)polykondensats zur Herstellung von Metallackdrähten wobei mindestens eine elektrisch isolierende Lackschicht ans den organisch modifizierten Kieselsäure (hetero)polykondensaten besteht ist dieses durch partielle oder vollständige hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser oder Feuchtigkeit, erhalten worden. Dieser Lack kann auf Metalldrähte, welche gegebenenfalls bereits eine oder mehrere elektrisch isolierende Lackschichten aufweisen, aufgetragen und gegebenenfalls nachfolgend getrocknet und gehärtet werden.

Vorteilhaft ist es, mindestens zwei Lackschichten, die ein organisch modifiziertes Kieselsäure(hetero)polykondensat darstellen, aufzutragen.

Das erfindungsgemäß zu verwendende organisch modifizierte Kieselsäure(hetero)polykondensat kann eine oder mehrere hydrolytisch (vor)kondensierte Verbindungen des Siliziums enthalten, die sich von verschiedenen Monomeren ableiten. Diese Beschichtungsmaterialien sind unter dem Namen ORMOCERe bekannt geworden. Auf den Offenbarungsgehalt der Anmeldungen DE 40 11 044 C2, DE 44 16 857 C1 und der DE 44 23 811 C1 wird ausdrücklich bezug genommen.

Beispiele für solche Monomere, die von allgemeinen Formeln ableitbar sind, sind:
I.

   {XₐR_{b}Si[(R'A)_{c}]_{(4-a-b)}}ₓB (I)

   Dabei können die Reste und Indices gleich oder verschieden sein und folgende Bedeutung haben:
   - A =: O, S, PR'', POR'', NHC(O)O oder NHC(O)NR'',
   - B =: ein geradkettiger oder verzweigter organischer Rest, der sich von einer Verbindung B' mit mindestens einer (für c = 1 und A = NHC(O)O oder NHC(O)NR'') bzw. mindestens zwei C = C-Doppelbindungen und 5 bis 50 Kohlenstoff-Atomen ableitet,
   - R =: Alkyl, Alkenyl, Aryl, Alkylaryl oder Arylalkyl,
   - R'=: Alkylen, Arylen oder Alkylenarylen,
   - R''=: wasserstoff, Alkyl oder Aryl,
   - X =: Wasserstoff, Halogen, Hydroxy, Alkoxy, Acyloxy, Alkylcarbonyl, Alkoxycarbonyl oder NR''₂,
   - a =: 1, 2 oder 3,
   - b =: 0, 1 oder 2,
   - c =: 0 oder 1,
   - x =: eine ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR'' steht,
   wobei die Alkyl- bzw. Alkenyl-Reste gegebenenfalls substituierte geradkettige, verzweigte oder cyclische Reste mit 1 bis 20 Kohlenstoff-Atomen sind und Sauerstoff- und/oder Schwefel-Atome und/oder Amino-Gruppen enthalten können, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkyl- und Aryl-Resten ableiten.
   Vorteilhaft bei auf diesen Silanen basiertem Lacksystem ist, daß dadurch die Möglichkeit der Anbindung an anorganische Oberflächen besteht (z.B. Cu). Durch die Variabilität der Anzahl der reaktiven Doppelbindungen kann die Härtung beeinflußt werden.
II. 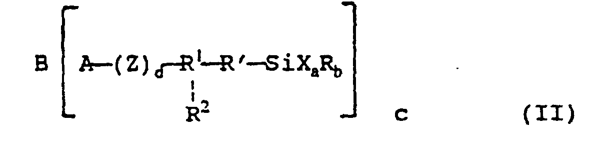 Wobei hier die Reste und Indices gieich oder verschieden sind und folaende Bedeutung haben:
   - B =: ein geradkettiger oder verzweigter organischer Rest mit mindestens einer C = C-Doppelbindung und 4 bis 50 Kohlenstoff-Atomen;
   - X =: Wasserstoff, Halogen, Hydroxy, Alkoxy, Acyloxy, Alkylcarbonyl, Alkoxycarbonyl oder HR''₂;
   - R =: Alkyl, Alkenyl, Aryl, Alkylaryl oder Arylalkyl;
   - R'=: Alkylen, Arylen, Arylenalkylen oder Alkylenarylen mit jeweils 0 bis 10 Kohlenstoff-Atomen, wobei diese Reste Sauerstoff- und/oder Schwefel-Atome und/oder Aminogruppen enthalten können;
   - R''=: Wasserstoff, Alkyl oder Aryl;
   - A =: O, S oder NH für
   d = 1 und
   Z = CO und
   R¹= gegebenenfalls Sauerstoff- und/oder Schwefel-Atome und/oder Amino-Gruppen enthaltendes Alkylen, Arylen oder Alkylenarylen mit jeweils 1 bis 10 Kohlenstoff-Atomen und
   R²= H oder COOH; oder
   - A =: O, S, NH oder COO für
   d = 0 oder 1 und
   Z = CHR, mit R = H, Alkyl, Aryl oder Alkylaryl, und
   R¹= gegebenenfalls durch Sauerstoff- oder Schwefel-Atome oder durch Amino-Gruppen unterbrochenes Alkylen, Arylen oder Alkylenarylen mit jeweils 1 bis 10 Kohlenstoff-Atomen und
   R²= OH; oder
   - A =: S für
   d = 1 und
   Z = CO und
   R¹= N und
   R₂= H;
   - a =: 1, 2 oder 3;
   - b =: 0, 1 oder 2, mit a + b = 3;
   - c =: 1, 2, 3 oder 4.

Vorteilhaft hierbei ist bei R² = -CO₂H, daß z.B. eine Komplexierung von Metallatomen der Drahtoberfläche erzielt werden kann. Dadurch entsteht ein sehr stabiler Verbund. 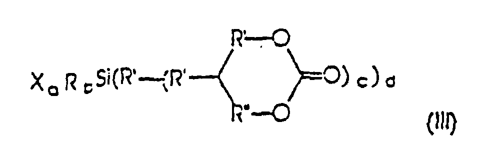 Dabei können die Reste und Indices gleich oder verschieden sein und folgende Bedeutung haben:
- X =: Wasserstoff, Halogen, Hydroxy, Alkoxy, Acyloxy, Alkylcarbonyl, Alkoxycarbonyl oder NR²₂;
- R =: Alkyl, Alkenyl, Aryl, Alkylaryl oder Arylalkyl;
- R'=: Alkylen, Arylen, Arylenalkylen oder Alkylenarylen mit jeweils 0 bis 10 Kohlenstoff-Atomen, wobei diese Reste Sauerstoff- und/oder Schwefel-Atome und/oder Amino-Gruppen enthalten können;
- R''=: Alkylen, Arylen, Arylenalkylen oder Alkylenarylen mit jeweils 1 bis 10 Kohlenstoff-Atomen, wobei diese Reste Sauerstoff - und/oder Schwefel-Atome und/oder Amino-Gruppen enthalten können;
- R²=: Wasserstoff, Alkyl oder Aryl;
- a =: 1, 2 oder 3;
- b =: 0, 1 oder 2, mit a + b = 1, 2 oder 3;
- c =: 1, 2, 3, 4, 5 oder 6;
- d =: 4 - a - b.

Vorteilhaft bei diesem System ist, daß die R^{I(II)}-O Gruppe unter Ringöffnung z.B. mit Aminogruppen reagieren können, wodurch ebenfalls ein stabiler Verbund entsteht.

Nachfolgend soll die Erfindung an weiteren Beispielen erklärt werden.

### I. Beipiele für die Verwendung verschiedener ORMOCER-Systeme als Topcoat

Verwendet wurden Kupferdrähte mit einer Teic-Polyesterimid-Grundschicht (Schichtdicke = 30 µm). Die folgenden aufgeführten Lacksysteme wurden als Decklack (Topcoat) aufgetragen und thermisch ausgehärtet. Bei 600 °C sind in Abhängigkeit der Ofenlänge Drahtgeschwindigkeiten von weit über 25 m/min möglich. Es resultieren Beschichtungen mit ausgezeichneter Oberflächengualität. Schwitzwasserstabilität (14 Tage bei 40 °C und 100 % relativer Luftfeuchtigkeit) ist ebenso gegeben wie eine hohe Thermoschockbeständigkeit (Rißfreiheit nach 10 bis 30 s, 300 °C). Es wird ein sehr guter Verbund zur Theic-Polyesterimid-Grundschicht, d.h. eine sehr gute Haftung beobachtet (in REM-Aufnahmen ist keine Phasengrenzfläche mehr sichtbar). Weitere Detaildaten sind bei den einzelnen Beispielen aufgeführt.

### Beispiel 1 SR-368 : MPMDM = 1:1

Zur Vorlage von 127 g (0,3 mol) Tris-(2-hydroxyethyl)isocyanurattriacrylat, gelöst in 300 ml Essigester, werden 54,0 g (0,3 mol) 3-Mercaptopropylmethyldimethoxisilan zugetropft. Unter Kühlung werden 19 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 8,6 g 0,5n HCl zugetropft. Nach ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften auf einem Cu-Draht mit einem Ø = 0,95 mm:
- Schichtdicke ca. 11 µm
- tan δ-Sprung (DIN) ca. 202 °C
- Schabekraft ca. 20 N
- 1XD-Wickellocke = rißfrei
- wickelbar

### Beispiel 2 SR-368 : MPMDM : TEOS = 1:1:0,2

Zur Vorlage von 33,8 g (0,08 mol) Tris(2-hydroxyethyl)isocyanurattriacrylat, gelöst in 80 ml Essigester, werden 14,4 g (0,08 mol) Mercaptopropylmethyldimethoxysilan zugetropft. Unter Kühlung werden 5,1 g einer ethanolischen KOH-Lösung langsam zugetropft. Nach etwa 5 min ist die Reaktion (Thioladdition an eine Acrylatdoppelbindung) abgeschlossen.Zur Hydrolyse und Kondensation der Methoxygruppen werden 2,3 g 0,5n HCl zugetropft. Nach ca. 5-stündiqem Rühren bei Raumtemperatur werden 3,33 g (0,016 mol) Tetraethoxysilan und 0,92 g 0,12n HCl zugegeben. Nach weiterem ca. 1-tägigen Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften auf einem Cu-Draht mit einem Ø = 0,95 mm:
- Schichtdicke ca. 19 µm
- 1XD-Wickellocke = rißfrei
- wickelbar

### Beispiel 3 SR-368 : MPMDM : TEOS = 1:1:0,4

Zur Vorlage von 63,50 g (0,15 mol) Tris(2-hydroxyethyl)isocyanurattriacrylat, gelöst in 150 ml Essigester, werden 27,0 g (0,15 mol) Mercaptopropylmethyldimethoxysilan zugetropft. Unter Kühlung werden 9,7 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 4,4 g 0,5n HCl zugetropft. Nach ca. 5-stündigem Rühren bei Raumtemperatur werden 12,5 g (0,06 mol) Tetraethoxysilan und 3,5 g 0,12n HCl zugegeben. Nach weiterem ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften auf einem Cu-Draht mit einem Ø = 0,95 mm bzw. 0,32 mm:
- Schichtdicke ca. 15 µm
- 1XD-Wickellocke = rißfrei
- wickelbar

### Beispiel 4 TMPTA : MPMDM = 1:1

Zur Vorlage von 74 g (0,25 mol) Trimethylolpropantriacrylat, gelöst in 250 ml Essigester, werden 45 g (0,25 mol) 3-Mercaptopropylmethyldimethoxysilan zugetropft. Unter Kühlung werden 15,8 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 4,5 g 0,7n HCl zugetropft. Nach ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften auf einem Cu-Draht mit einem Ø = 0,95 mm :
- Schichtdicke ca. 8 µm
- tan δ-Sprung (DIN) ca. 215 °C
- Schabekraft ca. 17 N

### Beispiel 5 SR-368 : MPMDM = 1:1,2

Zur Vorlage von 127 g (0,3 mol) Tris-(2-hydroxyethyl)isocyanurattriacrylat, gelöst in 360 ml Essigester, werden 64,9 g (0,36 mol) 3-Mercaptopropylmethyldimethoxysilan zugetropft. Unter Kühlung werden 22,8 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 10,4 g 0,5n HCl zugetropft. Nach ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften auf einem Cu-Draht mit einem Ø = 0,95 mm:
- Schichtdicke ca. 9 µm
- tan δ-Sprung (DIN) ca. 205 °C
- Schabekraft ca. 15 N
- 1XD-Wickellocke = rißfrei
- wickelbar

### Beispiel 6 SR-368 : MPMDM = 1:1,2 (mit Füllstoff)

Zur Vorlage von 127 g (0,3 mol) Tris-(2-hydroxyethyl)isocyanurattriacrylat, gelöst in 360 ml Essigester, werden 64,9 g (0,36 mol) 3-Mercaptopropylmethyldimethoxysilan zugetropft. Unter Kühlung werden 22,8 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 10,4 g 0,5n HCl zugetropft. Nach ca. 1-tägigem Rühren bei Raumtemperatur wird aufgearbeitet und 20 Gew.-% Feinstglas GM 32087 (silanisiert) zugesetzt. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften auf einem Cu-Draht mit einem Ø = 0,95 mm:
- Schichtdicke ca. 9 µm
- tan δ-Sprung (DIN) ca. 206 °C
- Schabekraft ca. 17,5 N
- 1XD-Wickellocke = rißfrei
- wickelbar

### Beispiel 7 SR-368 : MMDO = 1:1

Zur Vorlage von 169 g (0,4 mol) Tris-(2-hydroxyethyl)isocyanurattriacrylat, gelöst in 400 ml Essigester, werden 72,1 g (0,36 mol) Mercaptomethylmethyldiethoxysilan zugetropft. Unter Kühlung werden 25,3 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 11,5 g 0,5n HCl zugetropft. Nach ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften auf einem Cu-Draht mit einem Ø = 0,95 mm:
- Schichtdicke ca. 11 µm
- tan δ-Sprung (DIN) ca. 205 °C
- Schabekraft ca. 23 N

### II. Beispiele für die Verwendung verschiedener ORMOCER-Systeme als Fullcoat

Verwendet wurden Kupferdrähte (Ø = 0,32 mm) ohne eine Teic-Polyesterimid-Grundschicht. Die folgenden aufgeführten Lacksysteme wurden somit als Fullcoat aufgetragen und thermisch ausgehärtet. Bei z.B. 370 °C sind Drahtgeschwindigkeiten in Abhängigkeit der Ofenlänge von weit über 14 m/min möglich. Es resultieren Beschichtungen mit ausgezeichneter Oberflächenqualität. Es wird ein sehr guter Verbund zur Drahtoberfläche, d.h. eine sehr gute Haftung beobachtet. Weitere Detaildaten sind bei den einzelnen Beispielen aufgeführt.

### Beispiel 8 SR-368 : MPMDM : TEOS = 1:1:0,4

Zur Vorlage von 63,5 g (0,15 mol) Tris-(2-hydroxyethyl)isocyanurattriacrylat, gelöst in 150 ml Essigester, werden 27,0 g (0,15 mol) 3-Mercaptopropylmethyldimethoxysilan zugetropft. Unter Kühlung werden 9,7 g einer ethanolischen KOH-Lösung langsam zugetropft. Nach etwa 5 min ist die Reaktion (Thioladdition an eine Acrylatdapgelbindung) abgeschlossen. Zur Hydrolyse und Kondensation der Methoxygruppen werden 4,4 g 0,5n HCl zugetropft. Nach ca. 5-stündigem Rühren bei Raumtemperatur werden 12,5 g (0,06 mol) Tetraethoxysilan und 3,5 g 0,12n HCl zugegeben. Nach weiterem ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften:
- Schichtdicke ca. 10 µm
- 1XD-Wickellocke = rißfrei
- wickelbar

### Beispiel 9 SR-368 : MPMDM : TEOS = 1:1:0,5

Zur Vorlage von 212 g (0,5 mol) Tris-(2-hydroxyethyl)isocyanurattriacrylat, gelöst in 500 ml Essigester, werden 90 g (0,5 mol) 3-Mercaptopropylmethyldimethoxysilan zugetropft. Unter Kühlung werden 32,2g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 14,7 g 0,5n HCl zugetropft. Nach ca. 5-stündigem Rühren bei Raumtemperatur werden 52 g (0,25 mol) Tetraethoxysilan und 14,8 g 0,12n HCl zugegeben. Nach weiterem ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende Eigenschaften:
- Schichtdicke ca. 10 µm
- 1XD-Wickellocke = rißfrei
- wickelbar

### Beispiel 10 SR-368 : MPMDM : TEOS : DDDM = 1:1:0,4:0,3 (lösungsmittelfreie Applikation)

Zur Vorlage von 212 g (0,5 mol) Tris-(2-hydroxyethyl)isocyanurattriacrylat, gelöst in 500 ml Essigester, werden 90 g (0,5 mol) 3-Mercaptopropylmethyldimethoxysilan zugetropft. Unter Kühlung werden 32,2g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 14,7 g 0,5n HCl zugetropft. Nach ca. 5-stündigem Rühren bei Raumtemperatur werden 52 g (0,25 mol) Tetraethoxysilan und 14,8 g 0,12n HCl zugegeben. Nach weiterem ca. 1-tägigem Rühren bei Raumtemperatur wird aufgearbeitet, 3,2 g (0,15 mol) Dodecandioldimethacrylat zugesetzt und das Lösungsmittel mittels Rotationsverdampfer abgezogen. Das resultierende lösungsmittelfreie Lacksystem kann direkt zur Drahtbeschichtung verwendet werden.

### Beispiel 11 SR-368 : MPMDM : TEOS : 1:1:0,5

Zur Vorlage von 30,5 g (0,072 mol) Tris-(2-hydroxyethyl)isocyanurattriacrylat, geläst in 70 ml Ethoxyethylacetat, werden 13 g (0,072 mol) 3-Mercaptopropylmethyldimethoxysilan zugetropft. Unter Kühlung werden 4,6 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 14,7 g 0,5n HCl zugetropft. Nach ca. 5-stündigem Rühren bei Raumtemperatur werden 7,0 g (0,036 mol) Tetraethoxysilan und 2,14 g 0,12n HCl zugegeben. Nach weiterem ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende weitere Eigenschaften:
- Schichtdicke ca. 9 µm
- 1XD-Wickellocke = rißfrei.
- Schabekraft > 8 N
- wickelbar

### Beispiel 12 SR-368 : MPMDM : TEOS = 1,1:1:0,5

Zur Vorlage von 56,3 g (0,133 mol) Tris-(2-hydroxyethyl)isocyanurattriacrylat, gelöst in 100 ml Ethoxyethylacetat, werden 21,6 g (0,120 mol) 3-Mercaptopropylmethyldimethoxysilan zugetropft. Unter Kühlung werden 7,9 g einer ethanolischen KOH-Lösung langsam zugetropft. Nach etwa 5 min ist die Reaktion (Thioladdition an eine Acrylatdoppelbindung) abgeschlossen. Zur Hydrolyse und Kondensation der Methoxygruppen werden 3,53 g 0,5n HCl zugetropft. Nach ca. 5-stündigem Rühren bei Raumtemperatur werden 12,5 g (0,06 mol) Tetraethoxysilan und 3,52 g 0,12n HCl zugegeben. Nach weiterem ca. 1-tägigem Rühren bei Raumtemperatur wird aufgearbeitet. Der resultierende Lack kann direkt oder nach Modifikation des Lösungsmittelgehaltes bzw. Zusammensetzung zur Einstellung der Rheologie zur Drahtbeschichtung verwendet werden. Es resultieren folgende weitere Eigenschaften:
- Schichtdicke ca. 9 µm
- 1XD-Wickellocke = rißfrei
- wickelbar

| Verwendete Abkürzungen: | |
|---|---|
| Tris-(2-hydroxyethyl) isocyanurattriacrylat | = SR-368 |
| 3-Mercaptopropylmethyldimethoxysilan | = MPMDM |
| Tetraethoxysilan | = TEOS |
| Trimethylolpropantriacrylat | = TMPTA |
| Mercaptomethylmethyldiethoxysilan | = MMDO |
| Dodecandioldimethacrylat | = DDDM |

## Patentansprüche

1. Verwendung eines organisch modifizierten Kieselsäure (hetero) polykondensats, das erhalten worden ist durch partielle oder vollständige hydrolytische Kondensation einer oder mehrerer hydrolitsch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels durch Einwirken von Wasser und Feuchtigkeit zur Herstellung von Metallackdrähten, wobei mindestens eine elektrisch isolierende Lackschicht aus den organisch modifizierten Kieselsäure (hetero) polykondensaten besteht.

2. Verwendung nach Anspruch 1,
**dadurch gekennzeichnet, daß** das organisch modifizierte Kieselsäure(hetero)polykondensat eine oder mehrere hydrolytisch (vor)kondensierte Verbindungen des Siliciums enthält, die sich von Monomeren der allgemeinen Formel I ableiten,
{XₐR_{b}Si [(R'A)_{c}]_{(4-a-b}}ₓB (i)
in der die Reste und Indizes gleich oder verschieden sind und folgende Bedeutung haben:
A = O, S, PR'', POR'', NHC(O)O oder NHC(O)NR'',
B = ein geradkettiger oder verzweigter organischer Rest, der sich von einer Verbindung B' mit mindestens einer (für c = 1 und A = NHC(O)O oder NHC(O)NR'') bzw. mindestens zwei C = C-Doppelbindungen und 5 bis 50 Kohlenstoff-Atomen ableitet,
R = Alkyl, Alkenyl, Aryl, Alkylaryl oder Arylalkyl,
R'= Alkylen, Arylen oder Alkylenarylen,
R''= Wasserstoff, Alkyl oder Aryl,
X = Wasserstoff, Halogen, Hydroxy, Alkoxy, Acyloxy, Alkylcarbonyl, Alkoxycarbonyl oder NR''₂,
a = 1, 2 oder 3,
b = 0, 1 oder 2,
c = 0 oder 1,
x = eine ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR'' steht,
wobei die Alkyl- bzw. Alkenyl-Reste gegebenenfalls substituierte geradkettige, verzweigte oder cyclische Reste mit 1 bis 20 Kohlenstoff-Atomen sind und Sauerstoff- und/oder Schwefel-Atome und/oder Amino-Gruppen enthalten können, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylenund Alkylenaryl-Reste von den oben definierten Alkyl- und Aryl-Resten ableiten.

3. Verwendung nach Anspruch 1 oder 2,
**dadurch gekennzeichnet, daß** das organisch modifizierte Kieselsäure(hetero)polykondensat eine oder mehrere hydrolytisch (vor)kondensierte Verbindungen des Siliciums enthält, die sich von Monomeren der allgemeinen Formel II ableiten, 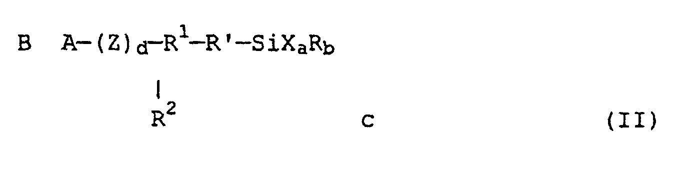 in der die Reste und Indices gleich oder verschieden sind und folgende Bedeutung haben:
B = ein geradkettiger oder verzweigter organischer Rest mit mindestens einer C = C-Doppelbindung und 4 bis 50 Kohlenstoff-Atomen;
X = Wasserstoff, Halogen, Hydroxy, Alkoxy, Acyloxy, Alkylcarbonyl, Alkoxycarbonyl oder NR''₂;
R = Alkyl, Alkenyl, Aryl, Alkylaryl oder Arylalkyl;
R'= Alkylen, Arylen, Arylenalkylen oder Alkylenarylen mit jeweils 0 bis 10 Kohlenstoff-Atomen, wobei diese Reste Sauerstoff- und/oder Schwefel-Atome und/oder Aminogruppen enthalten können;
R''= Wasserstoff, Alkyl oder Aryl;
A = O, S oder NH für
d = 1 und
Z = CO und
R¹= gegebenenfalls Sauerstoff- und/oder Schwefel-Atome und/oder Amino-Gruppen enthaltendes Alkylen, Arylen oder Alkylenarylen mit jeweils 1 bis 10 Kohlenstoff-Atomen und
R²= H oder COOH; oder
A = O, S, NH oder COO für
d = 0 oder 1 und
Z = CHR, mit R = H, Alkyl, Aryl oder Alkylaryl, und
R¹= gegebenenfalls Sauerstoff- und/oder Schwefel-Atome und/oder Amino-Gruppen enthaltendes Alkylen, Arylen oder Alkylenarylen mit jeweils 1 bis 10 Kohlenstoff-Atomen und
R²= OH; oder
A = S für
d = 1 und
Z = CO und
R¹= N und
R₂= H;
a = 1, 2 oder 3;
b = 0, 1 oder 2, mit a + b = 3;
c = 1, 2, 3 oder 4.

4. Verwendung nach einem oder mehreren der Ansprüche 1 bis 3,
**dadurch gekennzeichnet, daß** das organisch modifizierte Kieselsäure(hetero)polykondensat eine oder mehrere hydrolytisch (vor)kondensierte Verbindungen des Siliciums enthält, die sich von Monomeren der allgemeinen Formel III ableiten, 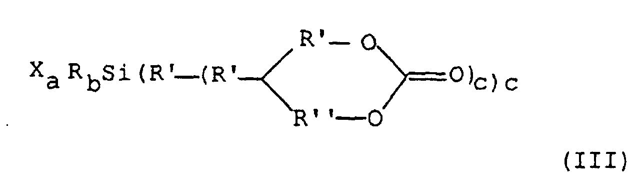 in der die Reste und Indices gleich oder verschieden sind und folgende Bedeutung haben:
X = Wasserstoff, Halogen, Hydroxy, Alkoxy, Acyloxy, Alkylcarbonyl, Alkoxycarbonyl oder NR²₂;
R = Alkyl, Alkenyl, Aryl, Alkylaryl oder Arylalkyl;
R'= Alkylen, Arylen, Arylenalkylen oder Alkylenarylen mit jeweils 0 bis 10 Kohlenstoff-Atomen, wobei diese Reste Sauerstoff- und/oder Schwefel-Atome und/oder Amino-Gruppen enthalten können;
R''= Alkylen, Arylen, Arylenalkylen oder Alkylenarylen mit jeweils 1 bis 10 Kohlenstoff-Atomen, wobei diese Reste Sauerstoff- und/oder Schwefel-Atome und/oder Amino-Gruppen enthalten können;
R²= Wasserstoff, Alkyl oder Aryl;
a = 1, 2 oder 3;
b = 0, 1 oder 2, mit a + b = 1, 2 oder 3;
c = 1, 2, 3, 4, 5 oder 6;
d = 4 - a - b.

5. Verwendung nach einem oder mehreren der Ansprüche 1 bis 4,
**dadurch gekennzeichnet, daß** sie mindestens zwei Lackschichten aufweisen, die ein organisch modifiziertes Kieselsäure(hetero)polykondensat darstellen.

6. Verwendung nach einem oder mehreren der Ansprüche 1 bis 5,
**dadurch gekennzeichnet, daß** das Metall Kupfer, Gold, Silber, Aluminium, Zinn, Zink oder Eisen oder eine Legierung dieser Metalle ist.

7. Verwendung nach einem oder mehreren der Ansprüche 1 bis 6,
**dadurch gekennzeichnet, daß** sie eine oder mehrere Lackschichten auf Theic-Polyesterimidund/oder Polyimid- und/oder Polyamid- und/oder Polyimidamid-Basis aufweisen.

8. Verwendung nach einem oder mehreren der Ansprüche 1 bis 7,
**dadurch gekennzeichnet, daß** eine oder mehrere Kieselsäure (hetero) polykondensat-Schichten Dicken zwischen 2 und 100 µm, bevorzugt zwischen 5 und 30 µm aufweisen.

9. Verwendung nach einem oder mehreren der Ansprüche 1 bis 8,
**dadurch gekennzeichnet, daß** eine oder mehrere aus anderen Stoffen oder Stoffgemischen bestehende Schichten aufgebracht sind.

## Claims

1. Use of an organically modified silicic acid (hetero)polycondensate which was obtained by partial or complete hydrolytic condensation of one or more hydrolytically condensable compounds of silicon and possibly other elements from the group B, Al, P, Sn, Pb, the transition metals, the lanthanides and actinides, and/or from precondensates derived from the above-mentioned compounds, possibly in the presence of a catalyst and/or of a solvent by means of the effect of water and moisture in order to produce lacquered metal wires, at least one electrically insulating lacquer layer being made of the organically modified silicic acid (hetero)polycondensates.

2. Use according to claim 1,
**characterised in that** the organically modified silicic acid (hetero)polycondensate contains one or more hydrolytically (pre)condensed compounds of silicon, which are derived from monomers of the general formula I,
{XₐR_{b}Si [(R'A)_{c}]_{(4-a-b)}}ₓB (I)
in which the radicals and indices are the same or different and have the following meanings:
A= O, S, PR", POR", NHC(O)O or NHC(O)NR",
B = an unbranched or branched organic radical which is derived from a compound B' with at least one (for c = 1 and A = NHC(O)O or NHC(O)NR") or at least two C=C double bonds and 5 to 50 carbon atoms,
R = alkyl, alkenyl, aryl, alkylaryl or arylalkyl,
R' = alkylene, arylene or alkylene arylene,
R" = hydrogen, alkyl or aryl,
X = hydrogen, halogen, hydroxy, alkoxy, acyloxy, alkylcarbonyl, alkoxycarbonyl or NR"₂,
a = 1, 2 or 3,
b = 0, 1 or 2,
c = 0 or 1,
x = a whole number, the maximum value of which corresponds to the number of double bonds in the compound B' minus 1 or is equal to the number of double bonds in the compound B' if c = 1 and A stands for NHC(O)O or NHC(O)NR",
the alkyl- or alkenyl radicals being possibly substituted unbranched, branched or cyclic radicals with 1 to 20 carbon atoms and being able to contain oxygen and/or sulphur atoms. and/or amino groups, aryl standing for possibly substituted phenyl, naphthyl or biphenyl and the above alkoxy-, acyloxy-, alkylcarbonyl-, alkoxycarbonyl-, alkylaryl-, arylalkyl-, arylene-, alkylene- and alkylene aryl radicals being derived from the alkyl- and aryl radicals defined above.

3. Use according to claim 1 or 2,
**characterised in that** the organically modified silicic acid (hetero)polycondensate contains one or more hydrolytically (pre)condensed compounds of silicon, which are derived from monomers of the general formula II, 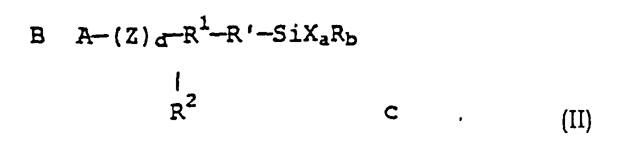 in which the radicals and indices are the same or different and have the following meanings:
B = an unbranched or branched organic radical with at least one C=C double bond and 4 to 50 carbon atoms;
X = hydrogen, halogen, hydroxy, alkoxy, acyloxy, alkylcarbonyl, alkoxycarbonyl or NR"₂;
R = alkyl, alkenyl, aryl, alkylaryl or arylalkyl;
R' = alkylene, arylene, or arylene alkylene or alkylene arylene with respectively 0 to 10 carbon atoms, these radicals being able to contain oxygen and/or sulphur atoms and/or amino groups;
R" = hydrogen, alkyl or aryl;
A = O, S or NH for
d = 1 and
Z = CO and
R¹ = alkylene, arylene or ahylene arylene, which possibly contain oxygen and/or sulphur atoms and/or amino groups, with respectively 1 to 10 carbon atoms and
R² = H or COOH; or
A = O, S, NH or COO for
d = 0 or 1 and
Z = CHR, with R = H, alkyl, aryl or alkylaryl, and
R¹ = alkylene, arylene or alkylene arylene, which possibly contain oxygen and/or sulphur atoms and/or amino groups, with respectively 1 to 10 carbon atoms and
R² = OH; or
A = S for
d = 1 and
Z = CO and
R¹ = N and
R₂ = H;
a = 1, 2 or 3;
b = 0, 1 or 2, with a + b = 3;
c = 1, 2, 3 or 4.

4. Use according to one or more of the claims 1 to 3,
**characterised in that** the organically modified silicic acid (hetero)polycondensate contains one or more hydrolytically (pre)condensed compounds of silicon, which are derived from monomers of the general formula III, 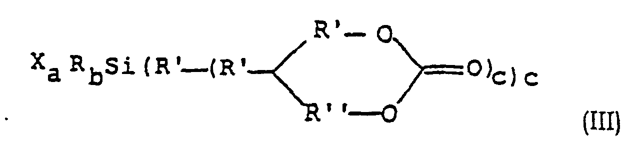 in which the radicals and indices are the same or different and have the following meanings:
X = hydrogen, halogen, hydroxy, alkoxy, acyloxy, alkylcarbonyl, alkoxycarbonyl or NR²₂;
R = alkyl, alkenyl, aryl, alkylaryl or arylalkyl;
R' = alkylene, arylene, arylene alkylene or alkylene arylene with respectively 0 to 10 carbon atoms, these radicals being able to contain oxygen and/or sulphur atoms and/or amino groups;
R" = alkylene, arylene, arylene alkylene or alkylene arylene with respectively 1 to 10 carbon atoms, these radicals being able to contain oxygen and/or sulphur atoms and/or amino groups;
R² = hydrogen, alkyl or aryl;
a = 1, 2 or 3;
b = 0, 1 or 2, with a + b = 1, 2 or 3;
c = 1,2,3,4,5 or 6;
d = 4-a-b.

5. Use according to one or more of the claims 1 to 4,
**characterised in that** they have at least two lacquer layers which present an organically modified silicic acid (hetero)polycondensate.

6. Use according to one or more of the claims I to 5,
**characterised in that** the metal is copper, gold, silver, aluminium, tin, zinc or iron or an alloy of these metals.

7. Use according to one or more of the claims 1 to 6,
**characterised in that** they have one or more lacquer layers on a basis of THEIC-polyesterimide and/or polyimide and/or polyamide and/or polyimidamide.

8. Use according to one or more of the claims 1 to 7,
**characterised in that** one or more silicic acid (hetero)polycondensate layers have thicknesses between 2 and 100 µm, preferably between 5 and 30 µm.

9. Use according to one or more of the claims 1 to 8,
**characterised in that** one or more layers are applied which are made of different materials or mixtures of material.

## Revendications

1. Utilisation d'un (hétéro)polycondensat d'acide silicique organiquement modifié, obtenu par condensation hydrolytique partielle ou complète de deux ou plusieurs composés hydrolytiquement condensables de silicium et éventuellement d'autres éléments du groupe B, Al, P, Sn, Pb, des métaux de transition, des lanthanides et des actinides, et/ou des précondensats décrits des composés mentionnés ci-dessus, éventuellement en présence d'un catalyseur et/ou d'un solvant, par l'action de l'eau ou de l'humidité, pour la fabrication de fils métalliques, dans laquelle au moins une couche de laque électriquement isolante se compose des (hétéro)polycondensats d'acide silicique organiquement modifiés.

2. Utilisation selon la revendication 1,
**caractérisée en ce que**
l'(hétéro)condensat d'acide silicique organiquement modifié à utiliser peut contenir un ou plusieurs composés de silicium hydrolytiquement (pré)condensés qui dérivent de monomères de formule générale (I)
{XₐR_{b}Si[(R'A)_{c}]_{(4-a-b)}}ₓB (I)
dans laquelle les radicaux et indices sont identiques ou différents et ont la signification suivante :
A = O, S, PR", POR", NHC(O)O ou NHC(O)NR",
B = radical organique à chaîne droite ou ramifiée qui dérive d'un composé B' avec au moins une double liaison (pour c = 1 et A = NHC(O)O ou NHC(O)NR") ou selon les cas au moins deux doubles liaisons C=C et 5 à 40 atomes de carbone,
R = alkyle, alcényle, aryle, alkylaryle ou arylalkyle,
R' = alkylène, arylène ou alkylène arylène,
R" = hydrogène, alkyle ou aryle,
X = hydrogène, halogène, hydroxy, alcoxy, acyloxy, alkylcarbonyle, alcoxycarbonyle ou NR"₂,
a = 1, 2 ou 3,
b = 0, 1 ou 2,
c = 0 ou 1,
x = un nombre entier, dont la valeur maximale correspond au nombre de doubles liaisons dans le composé B' moins 1, ou selon les cas est égal au nombre de doubles liaisons dans le composé B' lorsque c = 1 et A représente NHC(O)O ou NHC(O)NR",
dont les radicaux alkyle ou selon les cas alcényle sont des radicaux à chaîne droite, ramifiée ou cyclique éventuellement substitués comportant de 1 à 20 atomes de carbone et peuvent contenir des atomes d'oxygène et/ou de soufre et/ou des groupes amino, aryle représente un phényle, naphtyle ou biphényle éventuellement substitué et les radicaux alcoxy, acyloxy, alkylcarbonyle, alcoxy carbonyle, alkylaryle, arylalkyle, arylène, alkylène et alkylène aryle ci-dessus dérivent des radicaux alkyle et aryle définis plus haut.

3. Utilisation selon la revendication 1 ou 2,
**caractérisée en ce que**
l'(hétéro)condensat d'acide silicique organiquement modifié à utiliser peut contenir un ou plusieurs composés de silicium hydrolytiquément (pré)condensés qui dérivent de monomères de formule générale (II) 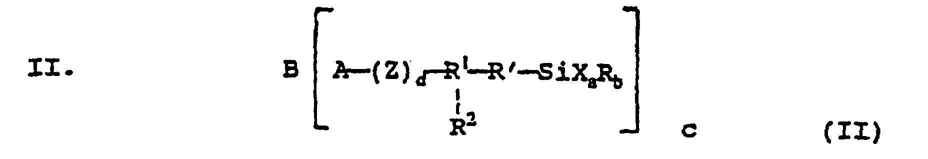 dans laquelle les radicaux et indices sont identiques ou différents et ont la signification suivante :
B = radical organique à chaire droite ou ramifiée comportant au moins une double liaison C=C et 4 à 50 atomes de carbone ;
X = hydrogène, halogène, hydroxy, alcoxy, acyloxy, alkylcarbonyle, alcoxycarbonyle ou NR"₂ ;
R = alkyle, alcényle, aryle, alkylaryle ou arylalkyle;
R' = alkylène, arylène, arylalkylène ou alkylènearylène avec à chaque fois de 0 à 10 atomes de carbone, ces radicaux pouvant contenir des atomes d'oxygène et/ou de soufre et/ou des groupes amino,
R" = hydrogène, alkyle ou aryle ;
A = O, S ou NH pour
d = 1 et
Z = CO et
R¹ = un alkylène, arylène ou alkylène arylène contenant le cas échéant des atomes d'oxygène et/ou de soufre et/ou des groupes amino, avec à chaque fois de 1 à 10 atomes de carbone, et
R² = H ou COOH ; ou
A = O, S, NH ou COO pour
d = 0 ou 1 et
Z = CHR avec R = H, alkyle, aryle ou alkylaryle et
R¹ = alkylène, arylène ou alkylène arylène éventuellement interrompu par des atomes d'oxygène ou de soufre ou par des groupes amino, avec à chaque fois de 1 à 10 atomes de carbone, et
R² = OH ou
A = S pour
d = 1 et
Z = CO et
R¹ = N et
R² = H;
a = 1, 2 ou 3;
b = 0, 1 ou 2, avec a+b=3;
c = 1, 2, 3 ou 4.

4. Utilisation selon une ou plusieurs de srevendications 1 à 3,
**caractérisée en ce que**
l'(hétéro)condensat d'acide silicique organiquement modifié à utiliser peut contenir un ou plusieurs composés de silicium hydrolytiquement (pré)condensés qui dérivent de monomères de formule générale (III) 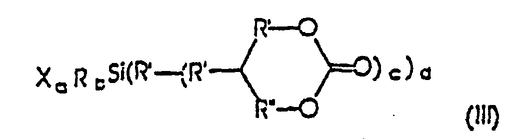 dans laquelle les radicaux et indices sont identiques ou différents et ont la signification suivante:
X = hydrogène, halogène, hydroxy, alcoxy, acyloxy, alkylcarbonyle, alcoxycarbonyle ou NR² ;
R = alkyle, alcényle, aryle, alkylaryle ou arylalkyle ;
R' = alkylène, arylène, arylènealkylène ou alkylènearylène avec à chaque fois 0 à 10 atomes de carbone, ces radicaux pouvant contenir des atomes d'oxygène et/ou de soufre et/ou des groupes amino,
R" = alkylène, arylène, arylènealkylène ou alkylènearylène avec à chaque fois de 1 à 10 atomes de carbone, ces radicaux pouvant contenir des atomes d'oxygène et/ou de soufre et/ou des groupes amino ;
R² = hydrogène, alkyle ou aryle ;
a = 1, 2 ou 3 ;
b = 0, 1 ou 2, avec a + b = 1, 2 ou 3;
c = 1,2,3,4,5 ou 6 ;
d = 4 - a - b.

5. Utilisation selon une ou plusieurs des revendications 1 à 4,
**caractérisée en ce qu'**
ils présentent au moins deux couches de laque qui représentent un (hétéro)-polycondensat d'acide silicique organiquement modifié.

6. Utilisation selon une ou plusieurs des revendications 1 à 5,
**caractérisée en ce que**
le métal est le cuivre, l'or, l'argent, l'aluminium, l'étain, le zinc ou le fer ou un alliage de ces métaux.

7. Utilisation selon une ou plusieurs des revendications 1 à 6,
**caractérisée en ce qu'**
ils présentent une ou plusieurs couches de laque à base de pâte de pigment-polyesterimide et/ou polyimide et/ou polyamide et/ou polyimidamide.

8. Utilisation selon une ou plusieurs des revendications 1 à 7,
**caractérisée en ce qu'**
une ou plusieurs couches d'(hétéro)-polycondensat d'acide silicique présente des épaisseurs comprises entre 2 et 100 µm, de préférence entre 5 et 30 µm.

9. Utilisation selon une ou plusieurs des revendications 1 à 8,
**caractérisée en ce qu'**
une ou plusieurs couches constituées d'autres matériaux ou mélanges de matériaux sont déposées.
